# FASCICULE DE BREVET EUROPEEN

(11) **EP 0 455 141 B1**
(45) Date de publication et mention de la délivrance du brevet: **16.08.1995**
(21) Numéro de dépôt: 91106702.3
(22) Date de dépôt: 25.04.1991
(51) Int. Cl.: G02B 6/25, B26D 7/14, B26F 3/00

(54) **Dispositif pour couper obliquement une fibre optique**
Vorrichtung zum Quertrennen von einer optischen Glasfaser
Apparatus to cut on the trias an optical fibre

(30) Priorité: 03.05.1990 FR 9005571
(43) Date de publication de la demande: 06.11.1991
(73) Titulaire: ALCATEL FIBRES OPTIQUES, F-95871 Bezons Cedex (FR)
(72) Inventeur: Hakoun, Roland, F-95330 Domont (FR); Reslinger, Michel, F-91070 Bondoufle (FR); Galopin, Joan, F-78610 Saint Leger en Yvelines (FR)
(74) Mandataire: Weinmiller, Jürgen

(56) Documents cités:
- EP-A- 0 167 313
- DE-U- 8 904 579
- PATENT ABSTRACTS OF JAPAN vol. 6, no. 88 (P-118)(966) 26 Mai 1982 ; & JP-A-57 24 903

## Description

L'invention concerne un dispositif pour couper obliquement une fibre optique, c'est-à-dire avec un plan de coupe non perpendiculaire à l'axe de la fibre.

Une préparation de l'extrémité d'une fibre optique est nécessaire pour obtenir un fonctionnement optimal d'une liaison optique. Une préparation classique consiste à réaliser une surface plane perpendiculaire à l'axe de la fibre, au moyen d'un dispositif de coupe. Dans le cas où deux fibres sont placées bout à bout, ces deux surfaces planes sont mises en coïncidence et elles produisent des réflexions pouvant dégrader les caractéristiques de transmission. Il est connu de remédier à ce défaut en réalisant, à l'extrémité de chacune des fibres, une surface plane non perpendiculaire à l'axe de la fibre, la normale à ce plan faisant un angle de 5 degrés, par exemple, avec l'axe de la fibre. Il est connu de réaliser cette surface plane en coupant la fibre selon un plan de coupe perpendiculaire à son axe, au moyen d'un outil de coupe classique, puis en polissant le plan de coupe de telle sorte que la surface obtenue soit inclinée, par exemple de 5 degrés, par rapport à l'axe de la fibre. Ce procédé est compliqué à mettre en oeuvre, notamment dans des conditions de chantier.

Le document Patent Abstracts of Japan vol.6, n°88 (P-118) (966) JP-A-57/24903 décrit un procédé pour couper obliquement une fibre optique, ce procédé consistant à fixer la fibre optique en deux points, au moyen de deux pinces; à la tordre; à la tendre en appliquant un galbe contre elle; puis à amorçer une rupture au moyen d'un tranchant en diamant. Un plan de coupe lisse est obtenu avec un angle d'inclinaison qui est fonction du couple de torsion et de la force de tension appliqués à la fibre. Mais il n'existe pas sur le marché de dispositif mettant en oeuvre ce procédé, ou un procédé voisin, pour couper obliquement une fibre optique dans des conditions de chantier, avec une précision de 1° reproductible.

Par ailleurs, la demande de brevet européen n°0 167 313 décrit une pince de coupe, pour couper une fibre optique perpendiculairement à son axe, qui comporte une pluralité de pièces pivotantes autour d'axes parallèles à la direction de la fibre, pour actionner respectivement des moyens de fixation de la fibre, un galbe, et un tranchant. Ce dispositif connu n'est pas prévu pour couper une fibre obliquement.

Le but de l'invention est de proposer un dispositif permettant de couper obliquement une fibre optique, selon un plan de coupe faisant un angle prédéterminé, de manière reproductible avec une précision de 1° dans une plage thermique de 0 à 40 degrés Celsius; qui soit simple à utiliser; robuste; et de faible coût.

Selon l'invention, le dispositif pour couper obliquement une fibre optique est tel que défini à la revendication 1.

Le dispositif ainsi défini permet d'obtenir une bonne précision et une bonne reproductibilité de l'angle du plan de coupe par rapport à l'axe de la fibre, grâce au fait que ce dispositif comporte des moyens pour fixer la fibre en trois points alignés.

La fibre est tout d'abord fixée dans les premiers et les deuxièmes moyens, puis elle est tordue en faisant tourner les deuxièmes moyens autour de l'axe de la fibre. Enfin, elle est immobilisée par les troisièmes moyens qui sont situés entre les premiers et les deuxièmes moyens. Entre les premiers et les troisièmes moyens, la fibre a un angle de torsion qui est une fraction de l'angle de rotation des deuxièmes moyens par rapport aux premiers moyens. Par conséquent, la fibre est coupée dans un état de torsion dont l'angle est déterminé avec une précision meilleure que celle de l'angle de rotation des deuxièmes moyens. Ceci procure une précision et une reproductibillté de l'angle du plan de coupe, meilleures que s'il n'y avait que les premiers et les deuxièmes moyens pour fixer la fibre et la tordre.

Le fait que tous les moyens mécaniques de ce dispositif soient mobiles en rotation autour d'un axe parallèle à la direction d'immobilisation de la fibre simplifie énormément ces moyens mécaniques et permet d'ouvrir largement le dispositif pour : insérer la fibre dans le dispositif, pratiquement sans risque de pollution du plan de coupe; nettoyer l'intérieur du dispositif pour éliminer les résidus de coupe dus à des utilisations antérieures, ce qui contribue à réduire les risques de pollution; assurer la maintenance du dispositif, notamment le réglage et le remplacement du tranchant en diamant. La simplicité de ces moyens mécaniques a pour conséquence qu'ils sont peu sensibles à l'usure en ce qui concerne la précision de positionnement de la fibre.

Selon un mode de réalisation particulier :
- la première et la deuxième pièces, qui sont montées de façon à tourner en sens inverse l'une de l'autre, sont écartées l'une de l'autre par un premier ressort de rappel;
- la quatrième et la deuxième pièces sont montées de façon à tourner dans le même sens, la quatrième pièce étant disposée à l'extérieur de la deuxième pièce et reliée à cette dernière par un deuxième ressort; ce ressort transmettant à la deuxième pièce une force éventuellement exercée par un utilisateur sur la quatrième pièce;
- la troisième et la première pièces sont montées de façon à tourner dans le même sens, la troisième pièce étant disposée à l'extérieur de la première pièce et reliée à cette dernière par un troisième ressort; ce ressort transmettant à la première pièce une force éventuellement exercée par un utilisateur sur la troisième pièce;
   et ces ressorts sont tels que, lorsque deux forces de valeurs croissantes sont exercées progressivement sur la troisième et la quatrième pièces, respectivement :
- les mors des troisiémes moyens de fixation se ferment avant que le galbe soit appliqué contre la fibre;
- et le galbe est appliqué contre la fibre avant que le tranchant soit appliqué contre la fibre.

Grâce à cette caractéristique, le dispositif est particulièrement simple à utiliser. Dans une première étape, l'opérateur fixe la fibre dans les premiers et les deuxièmes moyens; puis il tourne ces deuxièmes moyens d'un angle déterminé, pour tordre la fibre; puis il appuie avec ses doigts sur la troisième et la quatrième pièce, pour réaliser toutes les autres opérations nécessaires à la coupe : l'immobilisation de la fibre par les troisièmes moyens; l' application du galbe contre la fibre; puis l'application du tranchant en diamant contre la fibre, en vis-à-vis du galbe. Ces opérations sont réalisées automatiquement dans cet ordre, par le simple fait d'appuyer sur la troisième et la quatrième pièce du dispositif.

Selon une autre caractéristique, les moyens pour guider la fibre comportent une pièce plane creusée d'un sillon en V, située à l'extérieur des moyens pour fixer la fibre, du côté des premiers moyens pour la fixer et accessible à un opérateur pour permettre à celui-ci de presser la fibre dans le sillon, avec, l'un de ses doigts.

Cette caractéristique permet d'augmenter la précision du positionnement de la fibre au moment de sa mise en place dans le dispositif pour la couper. Cette précision de positionnement permet d'utiliser un tranchant en diamant ayant une longueur plus petite, et donc un moindre coût, et surtout permet d'obtenir une meilleure reproductibilité de l'angle du plan de coupe, qu'en l'absence de ces moyens pour guider la fibre.

L'invention sera mieux comprise et d'autres détails apparaîtront à l'aide de la description ci-dessous et des figures l'accompagnant :
- la figure 1 représente schématiquement un exemple de réalisation du dispositif selon l'invention, pendant la dernière étape de son fonctionnement, se terminant par la rupture de la fibre;
- les figures 2, 3, 4, 5 représentent respectivement quatre étapes successives de l'utilisation d'un exemple de réalisation du dispositif selon l'invention;
- les figures 6 et 7 représentent plus en détail un exemple de réalisation, respectivement par une vue de face et par une vue de côté en coupe.

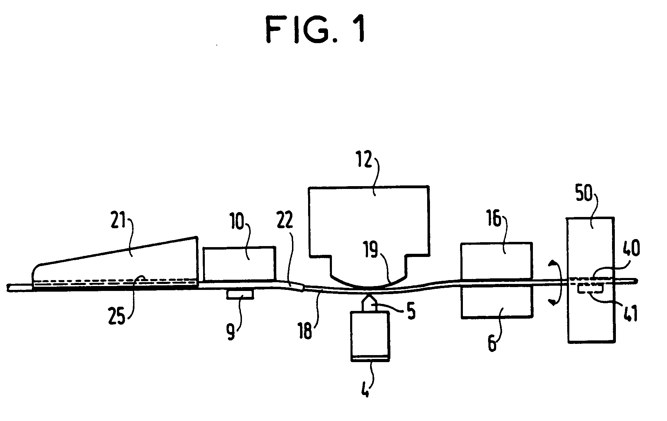

La figure 1 montre schématiquement l'étape finale du fonctionnement d'un exemple de réalisation du dispositif selon l'invention, pour couper une fibre optique 18 qui est dénudée partiellement de sa gaine 22, à proximité de son extrémité. La coupe est réalisée dans la partie qui est dénudée. La fibre 18, encore recouverte de sa gaine 22, repose dans un guide constitué d'un sillon en V, 25, creusé dans une pièce métallique plane 21. Elle est fixée en un premier point, en étant serrée par une pince constituée essentiellement d'une base 10 et d'un patin presseur 9, appuyant sur la gaine 22 de la fibre 18. La fibre 18 dénudée est fixée en un deuxième point, en étant serrée entre deux mors 16 et 6. Elle est fixée en un troisième point, en étant serrée par une pince rotative constituée d'une base 40 et d'un patin presseur 41. La pince 40, 41 est mobile en rotation autour d'un axe confondu avec l'axe de la fibre lorsque le patin presseur 41 serre la fibre contre la base 40. Un bouton 50 permet de tourner la pince 40, 41. La forme de la base 40 sera décrite plus en détail dans ce qui suit.

La fibre 18 a été immobilisée successivement au moyen de la pince 9, 10 puis de la pince 40, 41. Puis elle a été soumise à une torsion par une rotation de la pince 40, 41. Puis elle a été immobilisée en serrant les mors 6, 16. Un galbe 19 a ensuite été appliqué contre la fibre 18 dénudée, pour la soumettre à une tension. Enfin, un tranchant en diamant, 5, a été appliqué contre la fibre 18, en vis-à-vis du galbe 19, selon une direction normale à la surface du galbe et à l'axe de la fibre 18. A l'instant considéré, le tranchant 5 est enfoncé légèrement dans la fibre 18 pour créer une amorce de rupture qui est propagée à la fois par la torsion et par la tension de la fibre 18. La combinaison de la torsion et de la tension provoque une rupture selon un plan qui est incliné d'un angle fonction de la tension et de la torsion exercées sur la fibre 18.

Le galbe 19 est constitué par une surface courbe d'une pièce 12. Le tranchant en diamant 5 est appliqué au moyen d'une lame ressort 4.

Pour un exemple de fibre, pour une distance de 50 mm entre la pince 9, 10 et la pince rotative 40, 41, une coupe oblique à 5° ±1° est obtenue pour un angle de torsion de 1/6 de tour au niveau de la pince 40, 41. Le tranchant 5 est appliqué à une distance de 16mm, environ, de la pince 9, 10, par conséquent l'angle de torsion effectif, entre la pince 9, 10 et le point d'application du tranchant 5, est de 1/18 de tour, dans cet exemple. Il est à noter, que pour une bonne reproductibilité, il est important de réaliser la torsion avant la traction.

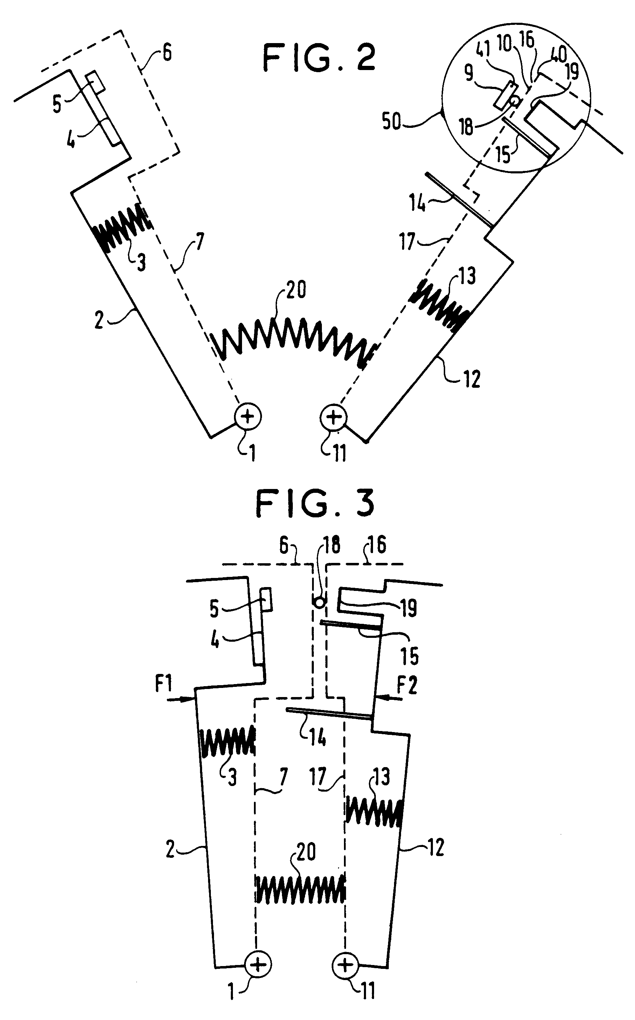

Les figures 2 à 5 illustrent toutes les étapes du fonctionnement de cet exemple de réalisation. Les pièces constituant cet exemple de réalisation sont représentées de manière très schématique pour faire apparaître plus clairement le fonctionnement de chaque pièce. L'axe d'immobilisation de la fibre 18 est perpendiculaire au plan de ces figures. Le dispositif a la forme d'une pince qui s'ouvre très largement pour permettre la mise en place d'une fibre 18 qui est à couper. Sur la figure 2, la pince est complètement ouverte pour permettre la mise en place de la fibre 18. La pince comporte deux axes de rotation, 1 et 11, parallèles entre eux et parallèles à la direction d'immobilisation de la fibre 18. Les pièces essentielles de la pince sont :
- une pièce 2, mobile en rotation autour de l'axe 1, supportant le tranchant en diamant 5 par l'intermédiaire de la lame ressort 4;
- une pièce 7, mobile en rotation autour de l'axe 1, et supportant le mors 6;
- une pièce 17, mobile en rotation autour de l'axe 11, supportant le mors 16, la base 10 de la pince 9, 10, et la base 40 de la pince 40, 41, cette base 40 étant mobile en rotation par rapport à la pièce 17 autour de l'axe d'immobilisation de la fibre 18;
- une pièce 12, mobile en rotation autour de l'axe 11, supportant le galbe 19 et deux butées, 14 et 15;
- un ressort 3, intercalé entre les pièces 2 et 7, pour les écarter lorsque la pince est au repos;
- un ressort 13 intercalé entre les pièces 12 et 17 pour les écarter lorsque la pince est au repos;
- un ressort 20 intercalé entre les pièces 7 et 17 pour les écarter lorsque la pince est au repos.

Sur la figure 2, la surface du mors 16 et la base 10 de la pince 10, 11 et la base 40 de la pince rotative 40, 41, apparaissent confondues car elles sont dans un même plan (avant torsion de la fibre). De même, le patin presseur 9 de la pince 9, 10 et le patin presseur 41 de la pince 40, 41 apparaissent confondus. La pince est représentée au repos, mais la fibre 18 a été mise en place et les patins presseurs 9 et 41 sont serrés pour immobiliser la fibre dans la pince 9, 10 et dans la pince rotative 40, 41.

Sur les figures 3, 4, 5 les patins presseurs 9 et 41, le bouton 50, et la base 40 de la pince rotative 40, 41 ne sont plus représentés pour clarifier ces figures, néanmoins la fibre 18 continue à être fixée par pes deux pinces 9, 10 et 40, 41.

Les pièces 2 et 12 sont les pièces les plus extérieures de la pince. Lorsqu'un opérateur utilise la pince, il exerce une pression, avec ses doigts, tendant à refermer l'une vers l'autre les pièces 2 et 12. Les pièces 7 et 17 sont les pièces les plus intérieures de la pince, et elles sont entraînées par les pièces 2 et 12 par' l'intermédiaire des ressorts 3 et 13. Quand la pince est au repos, elle est largement ouverte par l'action du ressort 20 qui écarte les pièces 7 et 17. L'opérateur peut alors placer la fibre dans le sillon 25 de la plaque 21 représentée sur la figure 1, dans la pince 9, 10, et dans la pince 40, 41; puis refermer la pince 9, 10, puis refermer la pince 40, 41 et tourner cette dernière d'un angle prédéterminé qui est fonction de l'angle du plan de coupe souhaité.

La figure 3 représente la deuxième étape du fonctionnement de la pince. L'opérateur exerce deux forces opposées F1 et F2, avec ses doigts, sur les pièces 2 et 12. Ces forces sont transmises par les ressorts 3 et 13 et provoquent un rapprochement des pièces 7 et 17 supportant les mors 6 et 16. Le ressort 20 est comprimé au maximum, alors que les ressorts 3 et 13 sont peu comprimés, ce qui a pour conséquence que le tranchant en diamant 5 et le galbe 19 ne sont pas encore appliqués contre la fibre 18. La fibre 18 est immobilisée dans une position parfaitement rectiligne.

Pendant tout le fonctionnement de la pince, qui dure très peu de temps, l'utilisateur maintient la base 40 dans la position qui détermine l'angle de torsion souhaité.

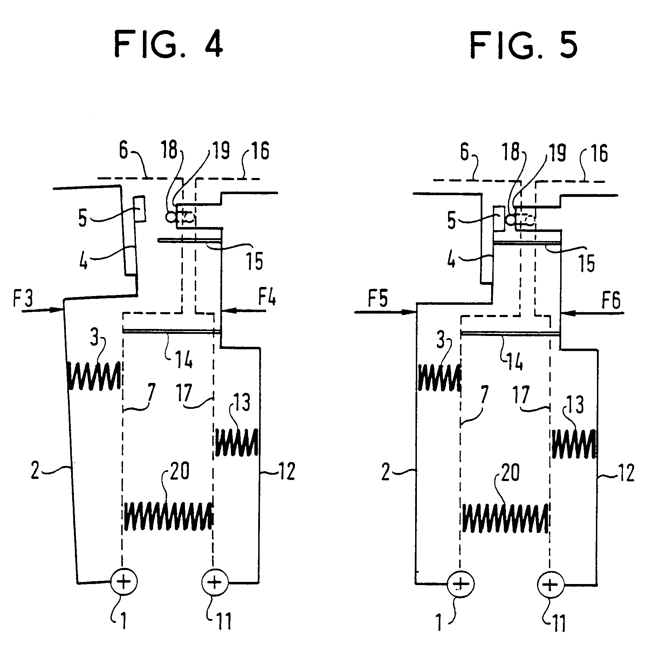

La figure 4 illustre la troisième étape du fonctionnement de la pince. L'opérateur exerce avec ses doigts une pression un peu plus forte que précédemment, en appliquant des forces opposées, F3 et F4, ayant un module plus grand que les forces F1 et F2, respectivement sur les pièces 2 et 12. Ces forces compriment les ressorts 3 et 13, mais le ressort 13 est beaucoup plus comprimé que le ressort 3, bien qu'étant identique, parce que le ressort 13 est à une distance plus faible de l'axe 11 que la distance du ressort 3 par rapport à l'axe 1. Le ressort 20 n'est pas plus comprimé car les mors 6 et 16 sont déjà arrivés en appui sur la fibre 18 au cours de la première étape du fonctionnement. La compression du ressort 13 provoque l'application du galbe 19 sur la fibre 18 pour tendre celle-ci. La tension exercée sur la fibre 18 par le galbe 19 est limitée au moyen de la butée 14 qui détermine la distance minimale entre la pièce 12 supportant le galbe 19, et la pièce 7 supportant le mors 6 du côté opposé au galbe 19, par rapport à la fibre 18.

La figure 5 représente la quatrième étape du fonctionnement de la pince. L'opérateur exerce une pression encore plus forte avec ses doigts, en appliquant deux forces opposées F5 et F6, de module supérieur à celui de F3 et F4, respectivement sur les pièces 2 et 12. Le ressort 3 est plus comprimé que précédemment. La pièce 2 applique le tranchant en diamant 5 contre la fibre 18. Il pénètre dans la fibre sur une profondeur de quelques micromètres créant une amorce de rupture. La rupture est réalisée par une propagation de cette amorce de rupture sous l'effet de la tension et la torsion de la fibre. La force d'application du tranchant 5 n'est pas déterminée par les forces F5 et F6, mais par l'effort de flexion de la lame ressort 4 qui relie le tranchant 5 à la pièce 2. La profondeur de pénétration du tranchant 5 dans la fibre 18 est limitée par la butée 15 qui détermine la distance minimale entre le tranchant 5 et le galbe 19.

Les étapes de fonctionnement décrites précédemment sont réalisées successivement, dans cet ordre, par une seule pression continue exercée par les doigts de l'opérateur. La fibre et le résidu sont libérés en relâchant la pression des doigts, les mors 6, 16 étant réouverts par le ressort 20; puis en desserrant les pinces 9, 10 et 40, 41.

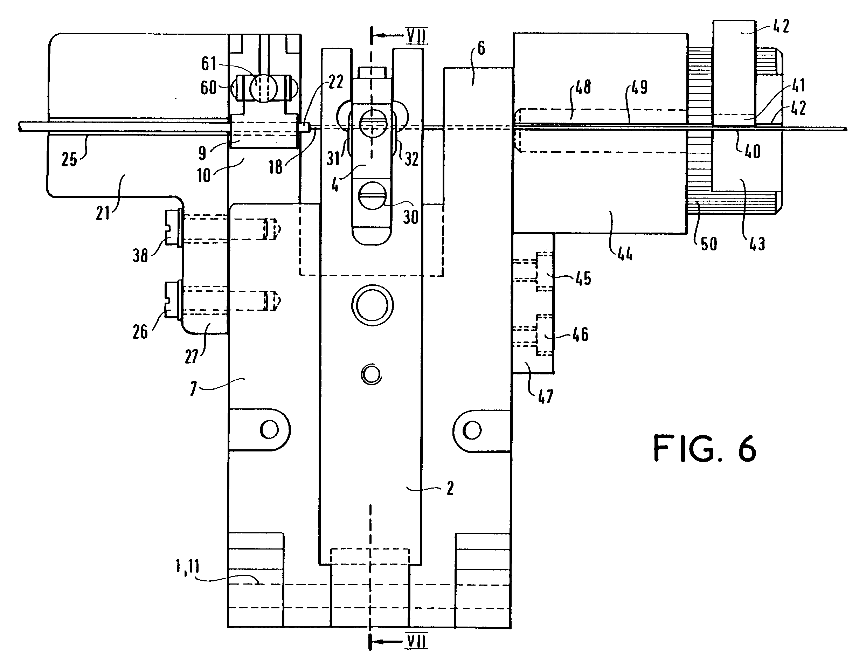

La figure 6 montre une vue de face d'un exemple de réalisation du dispositif selon l'invention. Elle montre notamment des moyens de guidage permettant d'améliorer la précision de positionnement de la fibre 18 en face du galbe 19 et du tranchant 5. Ces moyens comportent une plaque 21, creusée d'un sillon 25 en forme de V pour positionner la fibre gainée, 18, 22, à l'extérieur de la pince. La plaque 21 est parallèle au plan des mors 6, 16 et extérieure à la pince. Elle comporte une patte de fixation, 27, fixée à la pièce 17 par deux vis 26 et 38. La plaque 21 est accessible de telle sorte que l'opérateur puisse maintenir la fibre dans le sillon 25 avec l'un de ses doigts de la main gauche; un autre doigt de la main gauche étant appliqué sur l'autre face de la plaque 21. Ces moyens de guidage contribuent à obtenir une coupe oblique avec une précision de 1° reproductible.

La base 10 de la pince 9, 10 a une surface plane parallèle aux plans des mors 6, 16 et au plan de la pièce 21. Le patin presseur 9 est serré sur la fibre par une grenouillère 60 actionnée, manuellement, par un levier 61.

La pince rotative 40, 41 comporte un bouton moleté 50, ayant une forme générale cylindrique dont l'axe de symétrie est confondu avec l'axe d'immobilisation de la fibre 18. Il se prolonge par une tige cylindrique lisse 48 qui constitue un axe de rotation pour la pince rotative. Le bouton 50 et la tige 48 comportent une encoche axiale 49 qui permet de mettre en place la fibre 18 de telle sorte que son axe soit confondu avec l'axe de symétrie du bouton 50 et de la tige 48. Le bouton 50 comporte une cavité radiale qui contient un levier 42 portant le patin presseur 41. Un méplat 43 taillé dans le bouton 50 facilite la manipulation du levier 42. La base 40 de la pince 40, 41 est constituée par le fond de la cavité contenant le levier 42. Ce fond est confondu avec l'une des parois de l'encoche 49, pour constituer la base 40 sur laquelle la fibre 18 est pressée par le patin presseur 41.

La tige 48 tourillonne dans un support 44, comportant une patte de fixation 47 fixée par deux vis, 45 et 46, à la pièce 17 qui est cachée par la pièce 7 sur cette figure. Le support 44 est proche de la pièce 7 mais il n'appuie pas sur cette dernière, il laisse libre le déplacement du mors 6. Un index, non représenté, permet de lire la valeur de l'angle de torsion, au niveau du bouton 50.

Dans cet exemple de réalisation, le mors 6 est intégré à la pièce 7, qui est en aluminium par exemple. La pièce 7 a une forme générale qui est une fourche à deux branches. C'est une branche de cette fourche qui constitue le mors 6. Le tranchant 5 est monté sur un support 31 qui passe entre les deux branches de la fourche. Le support 31 est relié, par la lame ressort 4, à la pièce 2 qui est un bras déplaçable dans le plan médian de la fourche. Le support 31 est fixé à la lame ressort 4 par une vis 32. La lame 4 est fixée à la pièce 2 par une vis 30.

Le mors 16 est intégré à la pièce 17, qui est en aluminium par exemple. La pièce 17 a une forme générale qui est une fourche à deux branches, l'une constituant le mors 16 et l'autre constituant la base 10 de la pince 9, 10. La pièce 12 a une forme analogue à celle de la pièce 2. Le galbe 19 est intégré à la pièce 12 et il passe entre les deux branches de la pièce 17. La pièce 12 est en aluminium, elle aussi.

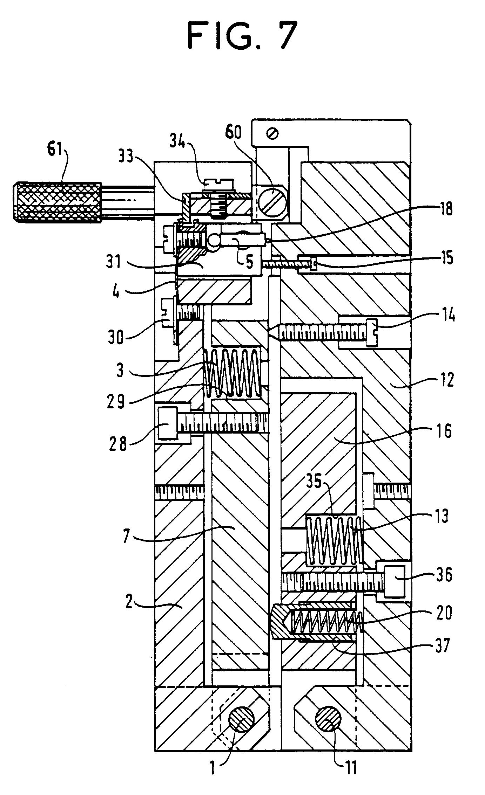

La figure 7 montre une vue en coupe, selon la direction de vue VII, de ce même exemple de réalisation. Sur cette figure, il apparaît que la pièce 31 supportant le tranchant 5 a un débattement qui est limité par une pièce 33 fixée à la pièce 2 par une vis 34. La butée 15 est constituée par une vis qui est vissée à travers la pièce 12 et dont l'extrémité bute sur la pièce 31. La butée 14 est constituée par une vis, vissée elle aussi à travers la pièce 12, et qui bute sur la pièce 7. Le ressort 3 est logé dans un trou 29 creusé dans la pièce 7 sur une face qui est en vis-à-vis de la pièce 2. Le ressort 13 est logé dans un trou 35 creusé dans la pièce 16, sur sa face située en vis-à-vis de la pièce 12.

Le ressort 20 est logé à l'intérieur d'un poussoir cylindrique 37 qui est logé dans un trou percé à travers la pièce 16 et débouchant en vis-à-vis de la pièce 7 et de la pièce 12. Un épaulement dans ce trou, et un épaulement sur le poussoir 37 limitent la course du poussoir 37 de telle sorte qu'il ne puisse pas sortir de ce trou lorsque la pince est largement ouverte. La pince peut être ouverte jusqu'à un angle voisin de 90°, son ouverture n'étant limitée que par la forme des pièces 2, 7, 17, 12 au voisinage des axes de rotation 1 et 11. L'écartement des pièces 2 et 7 sous l'action du ressort est limité par une vis 28 coulissant dans un trou de la pièce 2 et qui est vissée dans la pièce 7. L'écartement des pièces 16 et 12 sous l'action du ressort 13 est limité par une vis 36 coulissant dans un trou de la pièce 12 et qui est vissée dans la pièce 16.

La figure 7 montre le levier 61 et une partie de la genouillère 60 dans la position où ils serrent la fibre 18.

La portée de l'invention ne se limite pas aux exemples de réalisation décrits ci-dessus. De nombreuses variantes sont à la portée de l'homme de l'art. Notamment, il est possible de fixer cette pince sur un support, pour un usage en atelier, en fixant la pièce 12 à un support. L'utilisateur n'a alors qu'à appuyer sur la pièce 2 pour réaliser une coupe.

## Revendications

1. Dispositif pour couper obliquement une fibre optique, comportant:
- des premiers (9, 10), des deuxièmes (40, 41), et des troisièmes (6, 16) moyens pour fixer une fibre optique (18, 22) respectivement en trois points alignes distants les uns des autres; les troisièmes moyens étant disposes entre les premiers et deuxièmes moyens; les deuxièmes moyens pour fixer (40, 41) étant mobiles en rotation autour de l'axe d'immobilisation de la fibre, par rapport aux premiers moyens (9, 10), pour tordre la fibre après l'avoir fixée dans les premiers et les deuxièmes moyens (9, 10; 40, 41), et avant de la fixer dans les troisièmes moyens (6, 16);
- un galbe (19) situé entre les premiers et les troisièmes moyens (9, 10; 6, 16) d'un côté de l'axe d'immobilisation de la fibre;
- un tranchant (5) en diamant situé en vis-à-vis du galbe, de l'autre côté de l'axe d'immobilisation de la fibre;
- des moyens (12) pour appliquer le galbe (19) contre la fibre immobilisès afin de la tendre entre les premiers moyens (9, 10) et les troisièmes moyens (6, 16), après qu'elle ait été tordue par une rotation des deuxièmes moyens (40, 41);
- des moyens (2, 4) pour appliquer le tranchant (5) contre la fibre tendue, en vis-à-vis du galbe (19); et
- des moyens (21, 25), pour guider la fibre (18) pendant sa mise en place dans les premiers et les deuxièmes moyens pour la fixer (9, 10; 40, 41); ledit dispositif étant en outre tel que:
- les premiers et les deuxièmes moyens pour fixer (9, 10; 40, 41) comportent respectivement une première (9, 10) et une seconde (40, 41) pinces toutes deux supportèes par une première piece (17) qui est montée tournante autour d'un axe (11) parallèle à la direction d'immobilisation de la fibre la seconde pince (40, 41) étant montée tournante dans la première pièce (17), autour de l'axe de la fibre, pour tordre cette derniere;
- les troisièmes moyens pour fixer (6, 16) comportent une paire de mors dont un premier mors (16) est solidaire de la première pièce (17), et dont un second mors (6) est solidaire d'une deuxième pièce (7) qui est montée tournante, en sens inverse de la première piece (17), autour d'un axe (1) également parallèle à la direction d'immobilisation de la fibre;
- les moyens pour appliquer le galbe (19) contre la fibre immobilisée comportent une troisième pièce (12) supportant le galbe, montée tournante autour d'un axe (11) également parallèle à la direction d'immobilisation de la fibre; et
- les moyens pour appliquer le tranchant contre la fibre comportent une quatrième pièce (2) supportant le tranchant, montée tournante, en sens inverse de la troisièmes pièce (12) autour d'un axe (1) également parallèle à la direction d'immobilisation de la fibre.

2. Dispositif selon la revendication 1, dans lequel:
- la première (17) et la deuxième (7) pièces, qui sont montées de façon à tourner en sens inverse l'une de l'autre, sont écartées l'une de l'autre par un premier ressort de rappel (20);
- la quatrième (2) et la deuxième (7) pièces sont montées de façon à tourner dans le même sens, la quatrième pièce étant disposée à l'extérieur de la deuxième pièce (7) et reliée à cette dernière par un deuxième ressort (3); ce ressort (3) transmettant à la deuxième pièce (7) une force éventuellement exercée par un utilisateur sur la quatrième pièce (2);
- la troisième (12) et la première (17) pièces sont montées de façon à tourner dans le même sens, la troisième pièce étant disposée à l'extérieur de la première pièce et reliée à cette dernière par un troisième ressort (13); ce ressort transmettant à la première pièce (17) une force éventuellement exercée par un utilisateur sur la troisième pièce (12);
et dans lequel ces ressorts sont tels que, lorsque deux forces de valeurs croissantes sont exercées progressivement sur la troisième (12) et la quatrième pièces (2), respectivement:
- les mors (6, 16) des troisièmes moyens pour fixer se ferment avant que le galbe (19) soit appliqué contre la fibre;
- et le galbe (19) est appliqué contre la fibre avant que le tranchant (5) soit appliqué contre la fibre.

3. Dispositif selon la revendication 1, dans lequel les moyens (21, 25) pour guider la fibre (18, 22) comportent: une pièce plane (21) creusée d'un sillon en V (25), située à l'extérieur des moyens (9, 10; 6, 16; 40, 41) pour fixer la fibre, et accessible à un opérateur, pour permettre à celui-ci de presser la fibre dans le sillon (25), avec l'un de ses doigts.

4. Dispositif selon la revendication 1, dans lequel la seconde pince (40, 41) comporte un patin presseur (41) et une base (40) rotative autour d'un axe confondu avec l'axe, d'immobilisation de la fibre (18, 22).

## Claims

1. A device for cutting an optical fiber obliquely, the device comprising:
first means (9, 10), second means (40, 41), and third means (6, 16) constituting fixing means for fixing an optical fiber (18, 22) at three respective points that are in alignment, spaced apart from one another; the third means being disposed between the first and second means; the second fixing means (40, 41) being rotatable about the locking axis of the fiber relative to the first fixing means (9, 10) to twist the fiber after it has been fixed in the first and second fixing means (9, 10; 40, 41) and before it has been fixed in the third fixing means (6, 16);
a convex anvil (19) situated between the first and third fixing means (9, 10; 6, 16), on one side of the locking axis of the fiber;
a diamond cutter (5) situated overlying the anvil, on the other side of the locking axis of the fiber;
means (12) for applying the anvil (19) against the locked fiber in order to tension it between the first fixing means (9, 10) and the third fixing means (6, 16) after it has been twisted by rotation of the third fixing means (40, 41);
means (2, 4) for applying the cutter (5) against the tensioned fiber where it overlies the anvil (19); and
means (21, 25) for guiding the fiber (18) while it is being installed in the first and second fixing means (9, 10; 40, 41);
said device further being such that:
each of the first and second fixing means (9, 10; 40, 41) includes a respective first clamp (9, 10) and a respective second clamp (40, 41) both supported by a first part (17) which is mounted to rotate about an axis (11) parallel to the locking direction of the fiber, the second clamp (40, 41) being mounted to rotate in the first part (17), about the axis of the fiber, in order to twist the fiber;
the third fixing means (6, 16) include a pair of jaws of which a first jaw (16) is integral with the first part (17), and of which a second jaw (6) is integral with a second part (7) which is mounted to rotate about an axis (1) also parallel to the locking direction of the fiber;
the means for applying the anvil (19) against the locked fiber include a third part (12) supporting the anvil, mounted to rotate about an axis (11) also parallel to the locking direction of the fiber; and
the means for applying the cutter against the fiber include a fourth part (2) supporting the cutter, mounted to rotate in the opposite direction to the third part (12) about an axis (1) also parallel to the locking direction of the fiber.

2. A device according to claim 1, in which:
the first part (17) and the second part (7) which are mounted to rotate in opposite directions, are spaced apart from each other by a first return spring (20);
the fourth part (2) and the second part (7) are mounted to rotate in the same direction, the fourth part being disposed outside the second part (7) and connected thereto by a second spring (3); said spring (3) transmitting a force to the second part (7), which force is eventually exerted by a user on the fourth part (2);
the third part (12) and the first part (17) are mounted to rotate in the same direction, the third part being disposed outside the first part and connected thereto by a third spring (13), said spring transmitting a force to the first part (17), which force is eventually exerted by a user on the third part (12);
and in which said springs are such that, when two forces of increasing value are exerted progressively on the third part (12) and the fourth part (2), respectively:
the jaws (6, 16) of the third fixing means close before the convex anvil (19) is applied against the fiber; and
the anvil (19) is applied against the fiber before the diamond cutter (5) is applied against the fiber.

3. A device according to claim 1, in which the means (21, 25) for guiding the fiber (18, 22) comprise: a plane part (21) formed with a V-groove (25) and situated outside the first, second, and third fixing means (9, 10; 6, 16; 40, 41) and accessible to an operator to enable the operator to press the fiber into the groove (25) with a finger.

4. A device according to claim 1, in which the second clamp (40, 41) includes a presser pad (41) and a base (40) rotatable about an axis coinciding with the locking axis of the fiber (18, 22).

## Patentansprüche

1. Vorrichtung zum schrägen Schneiden einer Lichtleitfaser, die aufweist:
- erste (9, 10), zweite (40, 41) und dritte Mittel (6, 16), um eine Lichtleitfaser (18, 22) an drei miteinander fluchtenden Punkten festzulegen, die voneinander entfernt sind, wobei die dritten Mittel zwischen den ersten und den zweiten Mitteln angeordnet sind und die zweiten Befestigungsmittel (40, 41) in Bezug auf die ersten Mittel (9, 10) um die Festlegungsachse der Faser drehbeweglich sind, um die Faser zu verwinden, nachdem sie in den ersten und zweiten Mitteln (9, 10; 40, 41) festgelegt wurde und bevor sie in den dritten Mitteln (6, 16) festgelegt wird;
- einen Stempel (19), der sich zwischen den ersten und den dritten Mitteln (9, 10; 6, 16) auf einer Seite der Festlegungsachse der Faser befindet;
- eine Diamantschneide (5), die gegenüber dem Stempel auf der anderen Seite der Festlegungsachse der Faser angeordnet ist;
- Mittel (12); um den Stempel (19) gegen die festgelegte Faser anzulegen, um sie zwischen den ersten Mitteln (9, 10) und den dritten Mitteln (6, 16) zu spannen, nachdem sie durch eine Drehung der zweiten Mittel (40, 41) verwunden wurde;
- Mittel (2, 4), um die Schneide (5) gegen die gespannte Faser gegenüber dem Stempel (19) anzulegen, und
- Mittel (21, 25), um die Faser während ihrer Anordnung in den ersten Mitteln während ihres Festlegens zu führen (9, 10; 40, 41);
wobei in der Vorrichtung weiter
- die ersten und die zweiten Befestigungsmittel (9, 10; 40, 41) eine erste (9, 10) bzw. eine zweite Zange (40, 41) aufweisen, die beide von einem ersten Teil (17) getragen werden, das um eine Achse (11) drehbar parallel zur Festlegungsrichtung der Faser angeordnet ist, wobei die zweite Zange (40, 41) um die Achse der Faser drehbar in dem ersten Teil (17) angeordnet ist, um die Faser zu verwinden;
- die dritten Befestigungsmittel (6, 16) ein Paar Spannbacken aufweisen, deren erste Spannbacke (16) fest mit dem ersten Teil (17) verbunden ist und deren zweite Spannbacke (6) fest mit einem zweiten Teil (7) verbunden ist, das in einer zum ersten Teil (17) entgegengesetzten Richtung um eine ebenfalls zur Festlegungsrichtung der Faser parallele Achse (1) drehbar angeordnet ist;
- die Mittel zum Anlegen des Stempels (19) gegen die festgelegte Faser ein den Stempel tragendes drittes Teil (12) aufweisen, das um eine Achse (11) drehbar angeordnet ist, die ebenfalls parallel zur Festlegungsrichtung der Faser ist; und
- die Mittel zum Anlegen der Schneide gegen die Faser ein viertes Teil (2) aufweisen, das die Schneide trägt und in entgegengesetzter Richtung zum dritten Teil (12) um eine Achse (1) drehbar angeordnet ist, die ebenfalls parallel zur Festlegungsrichtung der Faser liegt.

2. Vorrichtung nach Anspruch 1, bei der
- das erste (17) und das zweite Teil (7), die so angeordnet sind, daß sie in einander entgegengesetzter Richtung drehen, voneinander durch eine erste Rückholfeder (20) abgespreizt werden,
- das vierte (2) und das zweite Teil (7) so angeordnet sind, daß sie in gleicher Richtung drehen, wobei das vierte Teil außerhalb des zweiten Teils (7) angeordnet und mit diesem letzteren durch eine zweite Feder (3) verbunden ist und wobei diese Feder (3) auf das zweite Teil (7) eine Kraft überträgt, die ggf. von einem Benutzer auf das vierte Teil (2) ausgeübt wird,
- das dritte (12) und das erste Teil (17) so angeordnet sind, daß sie in gleicher Richtung drehen, wobei das dritte Teil außerhalb des ersten Teils angeordnet und mit diesem über eine dritte Feder (13) verbunden ist, die auf das erste Teil (17) eine Kraft überträgt, die ggf. von einem Benutzer auf das dritte Teil (12) ausgeübt wird, wobei diese Federn so gestaltet sind, daß, wenn zwei Kräfte steigender Werte progressiv auf das dritte (12) bzw. das vierte Teil (2) ausgeübt werden,
- die Spannbacken (6, 16) der dritten Befestigungsmittel sich schließen, bevor der Stempel (19) gegen die Faser angelegt wird,
- und der Stempel (19) an die Faser angelegt wird, bevor die Schneide (5) an die Faser angelegt wird.

3. Vorrichtung nach Anspruch 1, bei der die Mittel (21, 25) zur Führung der Faser (18, 22) aufweisen: ein ebenes Teil (21) mit einer V-förmigen Rinne (25), das sich außerhalb der Mittel (9, 10; 6, 16; 40, 41) zur Festlegung der Faser befindet und für einen Benutzer zugänglich ist, so daß dieser die Faser mit einem seiner Finger in die Rinne (25) drücken kann.

4. Vorrichtung nach Anspruch 1, bei der die zweite Zange (40, 41) einen Druckschuh (41) und eine Basis (40) aufweist, die um eine mit der Festlegungsachse der Faser (18, 22) zusammenfallende Achse drehbar ist.
